Europäisches Patentamt

European Patent Office

Office européen des brevets

(11) Publication number: **0 389 268**
**A2**

## (12) EUROPEAN PATENT APPLICATION

(21) Application number: **90303054.2**

(22) Date of filing: **21.03.90**

(51) Int. Cl.⁵: **C08F 18/04**

(30) Priority: **23.03.89 GB 8906835**

(43) Date of publication of application:
**26.09.90 Bulletin 90/39**

(84) Designated Contracting States:
**AT BE CH DE DK ES FR GB GR IT LI NL SE**

(71) Applicant: **VINAMUL LTD.**
**Mill Lane**
**Carshalton, Surrey SM5 2JU(GB)**
(84) **GB NL**

Applicant: **UNILEVER NV**
**Burgemeester s'Jacobplein 1 P.O. Box 760**
**NL-3000 DK Rotterdam(NL)**
(84) **BE CH DE DK ES FR GR IT LI SE AT**

(72) Inventor: **Baines, Stephen John**
**28 Rowlands Road**
**Roffey, Horsham, West Sussex RH12**
**4LH(GB)**
Inventor: **Lothian, Barry Rowland**
**9 Brownings, Marlpit Hill**
**Edenbridge, Kent L62 8ER(GB)**
Inventor: **Dzimitrowicz, David John**
**Paarlandweg 14**
**NL-60061 EP Posterholt(NL)**

(74) Representative: **Roscoe, Brian Corrie et al**
**UNILEVER PLC Patents Division P.O. Box 68**
**Unilever House**
**London EC4P 4BQ(GB)**

(54) **Emulsion polymerisation.**

(57) Vinyl ester polymer emulsions of improved resistance to sedimentation upon dilutation are prepared in the presence as stabiliser of a derivatised poly vinyl alcohol, having an ionisable group, preferably a carboxylate, silanated or quarternised group.

EP 0 389 268 A2

EP 0 389 268 A2

## EMULSION POLYMERISATION

This invention relates to vinyl ester polymer emulsions, their preparation and products containing and derived from such emulsions.

Vinyl ester polymer emulsions are widely used as binders for paint, as adhesives, as treating agents for paper and textiles and as admixtures to cement mortar, concrete or other cement-containing products providing improved strength and durability. They include vinyl ester homopolymers and copolymers of eg. vinyl acetate with alkenes particularly ethylene, vinyl halides and the lower alkyl acrylates.

Vinyl ester polymer emulsions are prepared by polymerisation in liquid phase of a vinyl ester monomer or mixtures of vinyl ester monomers, for example vinyl acetate which is dispersed together with any other liquid co-monomer, in an aqueous phase, the polymerisation being promoted by the introduction of initiators and under pressure in the presence of an alkene and/or vinyl halide where an alkene and/or vinyl halide polymer is to be prepared.

Such polymers to which the present invention relates comprise vinyl C1 to C4 alkanoates forming at least 60% by weight of the copolymer, more usually at least about 70% by weight and an alkene component, eg. ethylene. Vinyl acetate is an example of a vinyl ester of a C1 to C4 alkanoic acid to which the invention is generally directed.

Although vinyl acetate is the preferred vinyl alkanoate monomer because of its availability, cost and known reactivity, other vinyl esters within the class defined are usable in particular vinyl formate, propionate, butyrate and isobutyrate.

The preferred alkene is ethylene but other ethylenic hydrocarbons, for example propylene, butylene and isobutene are usable, preferably a C2 to C4 alkene is used.

Various additives are also included before, during or after polymerisation to effect stabilisation of monomers and to control particle size during polymerisation and to establish and stabilise polymer particles of an appropriate size range in the emulsion product. Suitable additives include surfactants and or protective colloids including polyvinyl alcohol (PVA) of varying degree of hydrolysis and molecular weight. The former produce polymer emulsions of smaller average particle size enabling the emulsions to be diluted without undue sedimentation. This is useful for applications in which the most convenient or optimum concentration of polymer emulsion desired for that application is lower, and especially substantially lower, than that produced for commercial or practical reasons.

Examples of such applications include additions of polymer emulsions to cement slurry, cement mortar and concrete. However, polymer emulsions in which surfactant additives are present may render cement slurry, cement mortar or other cement containing products less workable and may retard their rate of setting and/or cure. Polymer emulsions which incorporate polyvinylalcohol as the stabilising agent during polymerisation have larger average particle size and are prone to sedimentation upon dilution, although they confer good workability to cement slurry, mortar or other cement mixtures and exert only a small influence on their rate of setting and cure.

The present invention provides vinyl ester polymer emulsions which have a small particle size while conferring good stability on dilution, with little settling effect and good workability to cement slurry, cement mortar and concrete and which are characterised by the presence of an emulsion stabilising agent comprising a derivatised polyvinylalcohol.

## PRIOR ART:

It has already been proposed in UK 2084588 to use as an emulsifier or protective colloid the reaction product of PVA and a diketene which may added to a monomer emulsion for the preparation of a synthetic resin emulsion or at a post-polymerisation stage.

PVA derivatives have been disclosed in JP 53091995 containing carboxylate functional groups. A silanated derivative of PVA is described in JP 61083259, as an admixture to cement to which a synthetic polymer emulsion is also included. The derivatised polyvinylalcohol is not disclosed as being used to stabilise the polymer co-admixture.

JP 53091995 refers only to the manufacture of carboxyl-modified polyvinylalcohol and not to any end use of such a product.

JP 60183259 discloses the use of a silanated derivative of polyvinylalcohol which is used as an admixture to cement to which a synthetic polymer emulsion is also included. The derivatised polyvinylalcohol is not disclosed as being used to stabilise the polymer emulsion co-admixture.

2

JP 58069764 discloses the use of a derivatised polyvinylalcohol which carries a cationic radical as an additive to cement to improve adhesion, etc. Again no disclosure is made of its use as a stabilising additive for emulsion polymerisation.

In JP 59232953 the preparation of an emulsion composition is described for addition to mortar and containing as protective colloid a PVA-type polymer including carboxyalkyl radicals, to effect stabilisation of the emulsion and retard cement setting. A cement dispersant containing modified PVA having unsaturated carboxylic acid radicals is described in JP 60171258.

In JP 54135891 a protective colloid for vinyl ester monomer emulsion polymerisation is described which is obtained by saponification of a copolymer in alcohol prepared from vinyl esters and alpha olefins.

In JP 80046643, JP 54045687 and JP 60240702 vinyl chloride is suspension-polymerised using modified PVA. No reference is made to vinyl ester emulsion polymerisation.

## GENERAL DESCRIPTION OF THE INVENTION

The present invention provides vinyl ester polymer emulsions of improved resistance to sedimentation upon dilution with water and having number average particle sizes preferably in the range of 0.3$\mu$m to 3.0$\mu$m, in which derivatised PVA containing ionisable groups is present in sufficient amount during polymerisation to effect stabilisation of the emulsion.

The invention also provides a novel process for the polymerisation of vinyl ester emulsions in which at least part of the PVA normally present as stabiliser is replaced by a stabilising amount of a derivatised PVA containing ionisable groups, and which is conducted at a carefully chosen pH within the range 2.0-5.0.

In the derivatised PVA stabilisers of the present invention, modification of the PVA may be achieved by co-polymerisation of suitable functional monomers followed by partial or complete hydrolysis, or by chemical modification of partially or completely hydrolysed PVA or by a combination of both methods. The characterising feature of such derivatised PVAs is the presence of functional groups containing an ionisable entity. Suitable functional groups include those of ionisable acids, eg. carboxylic and sulphonic acids and silanol groups or other functional groups capable of ionisation to produce anionic groups resident on the PVA. Other suitable functional groups include quaternary ammonium or quaternary ammonium alkyl groups capable of undergoing ionisation to produce cationic groups on the PVA. The derivatives of PVA used in the invention should be soluble at the pH used in the polymerisation process and will have a degree of hydrolysis of at least about 78% with molecular weight typically between 10,000 and 100,000.

The polymer emulsions of the invention exhibit good workability in cement and other hydraulic applications and do not significantly retard setting compared with surfactant stabilised polymer emulsions. They also resist sedimentation on dilution with water better than polymer emulsions which are stabilised by unmodified PVA.

The preparation of polymers according to the invention generally follows the method using PVA as stabiliser, the PVA being replaced in part or entirely by a derivatised PVA. The pH range adopted for the polymerisation to effect the polymer emulsion of desired particle size is critical and depends upon the stabiliser used in part or entirely to stabilise the polymerisation. The amount, the degree of hydrolysis and the molecular weight of the derivatised PVA used to effect stabilisation in the process of the present invention is not critical but preferably amounts from 1 to 10% are used by weight of the vinyl monomer used. Smaller amounts within this range have less effect on reducing particle size and 3% to 10% is therefore preferred. Similar amounts may be used to effect additional stabilisation of the polymer emulsion by addition after polymerisation.

Preferably the number average particle size of polymer particles in emulsions according to the invention is from 0.3 to 3 microns, preferably 0.6 to 1.1 microns

The number mean particle diameter was determined with the aid of a disc centrifuge (4) obtainable from Joyce Loebl. This device uses the principle of sedimentation with gravity enhanced sedimentation. The disc is a transparent rotor with a cavity diameter of 100mm and depth 6mm. A sample volume of 0.5ml was used at a concentration not exceeding 2.5% non volatiles, usually about 0.15%. The fill volume of spin fluid was 10 to 40ml, usually in multiples of 10 + 1ml of buffer. The buffer liquid and sample diluent were methanol (30%)/water. The test runs were performed at 10K rpm/11.

The polymerisation is preferably conducted at a temperature from 30-100$^\circ$C up to 100 bar, usually above 20 bar.

The process is suitable for the preparation of homopolymers of vinyl esters and copolymers with alkenes and/or vinyl halides. Copolymers of vinyl acetate and ethylene according to the invention are preferably in the ratio 5:1 to 7:1 vinyl acetate:ethylene by weight.

3

In the following examples according to the invention the effect of various derivatised PVA stabilisers of particle size of the emulsion polymer products is examined. All exhibited good workability in cement, in contrast to a control example prepared using PVA stabiliser alone, which exhibited poor workability in cement and substantially bigger particle size. Further particulars appear in the accompanying Table.

### Example 1

40 parts of PVA of molecular weight 25,000 and degree of hydrolysis 88% were dispersed with 56 parts of carboxylated PVA, marketed as Kuraray KL318, in 1,000 parts of water containing 5 ppm $Fe^{3+}$ as polymerisation catalyst promoter. The pH of the water phase obtained was adjusted to 4.0 with tartaric acid before heating in a pressure-resistant reactor to 30°C.

After nitrogen purging under pressure the vessel was pressurised to 60 bar with ethylene at 30°C and half of the total liquid monomer burden of 1,577 parts of vinyl acetate monomer was introduced.

Polymerisation was initiated by simultaneously introducing separate streams of redox couple comprising a hydrogen peroxide solution consisting of 3.38 parts of 35% $H_2O_2$ plus 1.0 parts $NaHCO_3$ in 200 parts water, and 3.38 parts of Formosul (sodium formaldehyde sulphoxylate) also diluted with 200 parts of water.

The $NaHCO_3$ solution is used as a buffer to maintain the desired pH throughout the polymerisation. The addition of the redox couple was at a higher rate, e.g. two or three times normal rate, during the first 20 minutes and the last 30 minutes of the polymerisation which in total took 4.5 hours. 30 minutes after commencing the addition of the redox couple, the remaining liquid monomer was introduced over a 3 hour period. The temperature was maintained at or below 75°C during the polymerisation process.

In the remaining examples according to the invention $NaHCO_3$ was omitted from the redox couple.

Examples 2, 3 and 4 otherwise repeated example 1 except that pH was adjusted to 2.8, 3.5 and 4.5 respectively.

In the remaining examples 5, 6 and 7 the pH was adjusted to 3.5 and the effect of alternative stabiliser systems was examined.

In example 5 the amount of derivatised stabiliser was increased to 96 parts and the PVA component was omitted.

In example 6 the stabiliser system consisted of 78 parts of PVA in conjunction with 18 parts of Kuraray R1130, a silanated PVA.

In example 7, 40 parts of PVA were used in conjunction with 56 parts of Kuraray C-318-2A, a quaternised PVA.

In a comparative example the formulation and procedure set out in example 6 were repeated except that the derivatised PVA was replaced by the same amount of PVA of molecular weight 80,000 and a degree of hydrolysis 88%.

The solids content of the emulsions according to the invention was between 54 and 55%; that of the comparative example 55.6%. The composition of the polymers was also closely similar, ranging from 13:87 to 16:84 by weight ethylene:vinyl acetate. The cement workability was measured in 3:1 sand:cement (OPC) mortar, with polymer:cement ratio of 0.1:1.0.

TABLE 1

| EXAMPLE NO | PARTICLE SIZE (NO. AVERAGE) MICRONS |
|---|---|
| 1 | 0.62 |
| 2 | 0.97 |
| 3 | 0.80 |
| 4 | 0.75 |
| 5 | 0.81 |
| 6 | 1.11 |
| 7 | 0.71 |
| COMPARATIVE EXAMPLE | 1.41 |

In Table 2 the relationship of particle size to settling is given a vinyl ester copolymerisation stabilised with PVA and derivatised PVA and diluted from 55% solids to 35% solids.

4

## TABLE 2

| Number Average particle size (microns) | % of settling after 6 months* |
|---|---|
| 0.95 | 30% |
| 0.60 | 12% |
| 0.55 | 7% |
| 0.50 | 3% |
| 0.38 | 0% |

* refers to the dilution of a PVA (and derivatised PVA) emulsion from 55% solids to 35% solids.

## Claims

1. A vinyl ester polymer emulsion composition of improved resistance to settling on dilution which is characterised by the presence as an emulsion stabilising agent of a derivatised polyvinylalcohol containing ionisable groups.

2. Composition according to claim 1 wherein the stabilising agent comprises a silanated, quaternised or carboxylated polyvinylalcohol.

3. Composition according to claim 1 or 2 wherein the degree of hydrolysis of the said stabilising agent is at least about 78%.

4. Composition according to any of the preceding claims wherein the molecular weight of the stabilising agent is from 10,000 to 100,000.

5. Composition according to any of the preceding claims wherein the amount of said stabilising agent in the composition is from 1 to 10% by weight, preferably 3 to 10%.

6. Composition according to any of the preceding claims wherein the number average particle size range of the emulsion particles is from 0.3 to 3 microns.

7. Composition according to any of the preceding claims wherein the stabilising agent further comprises polyvinylalcohol.

8. Composition according to claim 7 wherein the amount of polyvinylalcohol is from 2 to 10% by weight.

9. Composition according to any preceding claims which comprises vinyl acetate:ethylene in the amount from 5:1 to 7:1 by weight.

10. Process for the preparation of a vinyl polymer emulsion composition as claimed in claim 1 comprising polymerising an emulsion in aqueous phase of a liquid comonomer comprising a vinyl ester of a C1 to C4 alkanoic acid which is characterised by the presence as stabilising agent of an effective amount of a derivatised polyvinyl alcohol.

11. Process according to claim 10 wherein the stabilising agent further comprises an effective amount of polyvinyl alcohol.

12. Process according to claims 10 or 11 wherein the polymerisation is conducted at super atmospheric pressure in the presence of a C2 to C4 alkene.

13. Process according to claims 10 to 12 wherein the polymerisation is conducted at a pH from 2.0 to 5.0.

14. The use of a derivatised PVA to stabilise vinyl ester copolymer emulsions to provide improved stability on dilution.